# EUROPÄISCHE PATENTSCHRIFT

(11) **EP 3 908 163 B1**
(45) Veröffentlichungstag und Bekanntmachung des Hinweises auf die Patenterteilung: **22.02.2023**
(21) Anmeldenummer: 19832588.8
(22) Anmeldetag: 13.12.2019
(51) Int. Cl.: A47J 47/06, B65D 43/02

(54) **FRISCHHALTE-UNTERDRUCKBEHÄLTER FÜR LEBENSMITTEL**
FRESHNESS-RETAINING NEGATIVE PRESSURE CONTAINER FOR FOOD
CONTENANT SOUS VIDE DE CONSERVATION DE FRAÎCHEUR POUR ALIMENTS

(30) Priorität: 11.01.2019 DE 102019000133
(43) Veröffentlichungstag der Anmeldung: 17.11.2021
(73) Patentinhaber: Zwilling J. A. Henckels AG, 42657 Solingen (DE)
(72) Erfinder: DINKHELLER, Simon, 59368 Werne (DE)
(74) Vertreter: Cohausz Hannig Borkowski Wißgott
(86) Internationale Anmeldenummer: PCT/EP2019/085028
(87) Internationale Veröffentlichungsnummer: WO 2020/143994

(56) Entgegenhaltungen:
- EP-A2- 1 780 143
- US-B1- 6 364 152

## Beschreibung

Die Erfindung betrifft einen Behälter zum Aufbewahren von Lebensmitteln mit oberem waagerechten Deckel, dessen Außenrand rundum ein Dichtungsprofil aufweist, das bei geschlossenem Behälter am oberen Rand des Behälters anliegt, wobei der Deckel eine Öffnung mit Ventil aufweist, über die Luft aus dem geschlossenen Behälter absaugbar ist, um innerhalb des Behälters einen niedrigeren Druck (Unterdruck) zu erhalten, der geringer ist als der Atmosphärendruck.

Es sind Behälter zum Frischhalten von Lebensmitteln bekannt, die durch einen oberen Deckel luftdicht verschließbar sind und deren Deckel eine Öffnung mit Ventilfunktion aufweist, an der eine insbesondere von Hand betätigbare Pumpe angeschlossen wird, um im Behälterinneren einen Unterdruck zu schaffen, durch den im Behälter befindliche Lebensmittel länger haltbar sind. Solche Frischhaltebehälter werden oft "Vakuumbehälter" genannt, obwohl nur ein Unterdruck und kein Vakuum erreichbar ist.

Die bekannten Frischhalte-Unterdruckbehälter, wie sie z.B. aus der Publikation EP 1 780 143 A2 bekannt sind, weisen kein Anzeigegerät/Manometer oder Indikator auf, so dass nicht erkannt werden kann, ob im Behälterinneren Unterdruck besteht.

Aufgabe der Erfindung ist es, einen Frischhalte-Unterdruckbehälter der eingangs genannten Art so zu verbessern, dass leicht ersichtlich ist, ob im Behälter Unterdruck besteht und ob der etwaige Unterdruck gering oder stark ausgebildet ist.

Diese Aufgabe wird erfindungsgemäß dadurch gelöst, dass der Deckel einen Innenbereich aufweist, der von einem Deckelrand rundum umgeben ist, wobei der Deckelinnenbereich am Deckelrand über das flexible, rundum laufende Dichtungsprofil befestigt ist, das eine höhenveränderliche Lagerung des Deckelinnenbereichs bildet, wobei bei nicht anliegendem Unterdruck das Dichtungsprofil den Deckelinnenbereich in einer oberen Stellung hält und bei anliegendem Unterdruck das Dichtungsprofil eine Bewegung des Deckelinnenbereichs in eine untere Stellung zulässt.

Der im Behälterinneren erzeugte Unterdruck zieht den beweglich gelagerten Deckelinnenbereich nach unten, so dass der Nutzer leicht erkennen kann, ob im Behälterinneren Unterdruck besteht. Hierbei kann die Lagerung des Deckelinnenbereichs so gestaltet sein, dass bei geringem Unterdruck der Deckelinnenbereich weniger nach unten sinkt als bei stärkerem Unterdruck. Dabei sind Konstruktion und Lagerung des Deckelinnenbereichs besonders einfach und leicht handhabbar.

Eine besonders einfache Herstellung und Montage ist dann gegeben, wenn das Dichtungsprofil, das den Deckelinnenbereich am Deckelrand hält, einstückig mit dem Dichtungsprofil verbunden ist, das den Deckelrand am oberen Rand des Behälters abdichtet.

Für eine hohe Dichtheit des Deckels am Behälterinnenrand ist besonders vorteilhaft, wenn in der unteren Stellung des Deckelinnenbereichs das Dichtungsprofil derart verformt ist, dass die am Behälterinnenrand anliegende Dichtfläche vergrößert ist.

Für eine hohe Dichtheit ist auch von Vorteil, wenn beim Dichtungsprofil die Wandstärke der am Behälterinnenrand anliegenden Dichtfläche dünner ausgestaltet ist als die Wandstärke des oberen Bereichs des Dichtungsprofils. Ferner wird hierzu vorgeschlagen, dass das Dichtungsprofil, insbesondere die am Behälterinnenrand anliegende Dichtfläche, Noppen, Wülste oder Ausformungen aufweist.

Das Dichtungsprofil kann auch so ausgebildet sein, dass es in der unteren Stellung des Deckelinnenbereichs sowohl den Deckelrand mit dem oberen Rand des Behälters als auch gleichzeitig den Deckelrand mit dem Deckelinnenbereich abdichtet. Das Dichtungsprofil entfaltet somit bei Unterdruck Dichtwirkungen an seinen beiden Enden.

Zwei Ausführungsbeispiele der Erfindung sind in den Zeichnungen dargestellt und werden im Folgenden näher beschrieben.

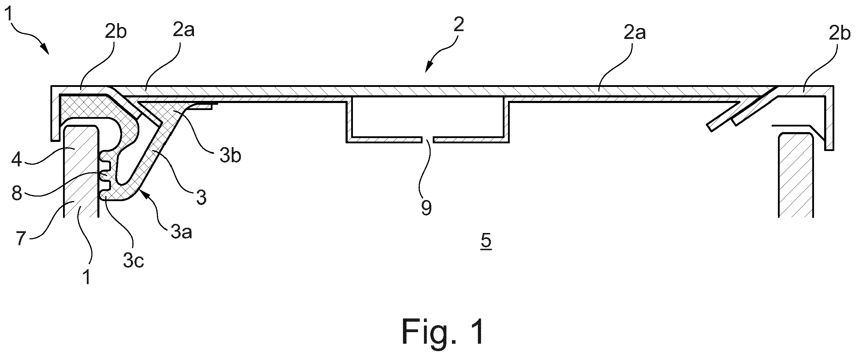

- Fig. 1: ein erstes Ausführungsbeispiel in einem senkrechten Querschnitt durch den oberen Bereich des erfindungsgemäßen Frischhalte-Unterdruckbehälters, wobei der Innenbereich 2a durch den Unterdruck in einer untersten Stellung steht,
- Fig. 2: ein zweites Ausführungsbeispiel bei dem das Dichtungsprofil sowohl den Deckelrand mit dem oberen Rand des Behälters als auch gleichzeitig den Deckelrand mit dem Deckelinnenbereich abdichtet bei angehobenem Deckelinnenbereich.

Der Behälter 1 zum Aufbewahren von Lebensmitteln weist einen waagerechten, runden, ovalen oder in etwa rechteckigen Boden auf mit einer umlaufenden Behälterwand 7. Der nach oben offene Behälterinnenraum 5 ist durch einen waagerechten Deckel 2 verschließbar, an dessen Außenrand ein umlaufendes Dichtungsprofil 3 befestigt ist, das aus einem elastischen Kunststoff wie Silikon oder Acryl besteht und vorzugsweise als abgelängtes Endlosprofil durch einen Extruder hergestellt wird.

Der Deckel 2 weist einen Deckelinnenbereich 2a auf, der von einem Deckelrand 2b rundum umgeben ist. Der Deckelinnenbereich 2a ist mit dem Deckelrand 2b über den oberen inneren Bereich 3b des Dichtungsprofils 3 verbunden, wobei das Dichtungsprofil 3 den Deckelrand 2b mit dem oberen Rand 4 der Behälterwand 7 abdichtet.

Das Dichtungsprofil 3 ist mit seinem oberen Bereich 3d an der Unterseite des Deckelrandes 2b befestigt und bildet mit seiner unteren Außenseite 3c und seinem unteren Bereich 3a eine äußere Dichtfläche, die bei geschlossenem bzw. aufgesetztem Deckel an der Innenfläche des oberen Randes 4 der Behälterwand 7 dichtend anliegt.

Das ringförmige Dichtungsprofil 3 weist einen V-förmigen, nach oben offenen Querschnitt auf, dessen oberer äußerer Randbereich 3d an der Unterseite des Deckelrandes 2b und dessen oberer innerer Randbereich 3b an der Unterseite des äußeren Randes des Deckelinnenbereichs 2a befestigt insbesondere angeklebt ist.

Der untere ringförmige Bereich 3a des nach oben offenen Dichtungsprofils 3 begrenzt den Behälterinnenraum 5, so dass hierdurch das Dichtungsprofil 3 dem im Behälter befindlichen Unterdruck ausgesetzt ist. Der Unterdruck bewirkt eine Bewegung des unteren Bereichs 3a und insbesondere auch der seitlichen Außenseite 3c des Dichtungsprofils nach außen, wodurch die Dichtfläche 3c des Dichtungsprofils vergrößert und der Dichtdruck erhöht wird.

In einer vorteilhaften Ausführungsform ist die Wandstärke der am Behälterinnenrand anliegenden Dichtfläche 3c dünner ausgestaltet als die Wandstärke der oberen Bereiche 3b, 3d des Dichtungsprofils 3. Außerdem kann das Dichtungsprofil 3, insbesondere die am Behälterinnenrand anliegende Dichtfläche 3c, Noppen, Wülste 8 oder Ausformungen aufweisen.

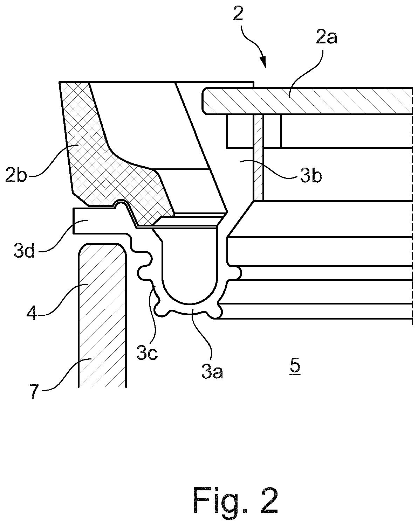

In einer alternativen Ausführungsform gemäß Fig. 2 ist das Dichtungsprofil 3 an dem Deckelinnenbereich 2a so befestigt, dass es mit seinem oberen inneren Bereich 3b eine Dichtfläche bildet, die bei geschlossenem bzw. aufgesetztem Deckel zwischen Deckelrand 2b und Deckelinnenbereich 2a dichtend anliegt.

In beiden Ausführungen können Behälterboden, Behälterwand und Deckel aus den unterschiedlichsten Materialien bestehen, insbesondere aus Kunststoff, Metall oder Glas.

## Patentansprüche

1. Behälter (1) zum Aufbewahren von Lebensmitteln mit oberem waagerechten Deckel (2), dessen Außenrand rundum ein Dichtungsprofil (3) aufweist, das bei geschlossenem Behälter am oberen Rand (4) des Behälters anliegt, wobei der Deckel (2) eine Öffnung (9) mit Ventil aufweist, über die Luft aus dem geschlossenen Behälter absaugbar ist, um innerhalb des Behälters einen Unterdruck zu erhalten, der geringer ist als der Atmosphärendruck, **dadurch gekennzeichnet, dass** der Deckel (2) einen Innenbereich (2a) aufweist, der von einem Deckelrand (2b) rundum umgeben ist, wobei der Deckelinnenbereich (2a) am Deckelrand (2b) über das flexible, rundum laufende Dichtungsprofil (3) befestigt ist, das eine höhenveränderliche Lagerung des Deckelinnenbereichs (2a) bildet, wobei bei nicht anliegendem Unterdruck das Dichtungsprofil (3) den Deckelinnenbereich (2a) in einer oberen Stellung hält und bei anliegendem Unterdruck das Dichtungsprofil (3) eine Bewegung des Deckelinnenbereichs (2a) in eine untere Stellung zulässt.

2. Behälter nach Anspruch 1, **dadurch gekennzeichnet, dass** das Dichtungsprofil (3), das den Deckelinnenbereich (2a) am Deckelrand (2b) hält, einstückig mit dem Dichtungsprofil (3) verbunden ist, das den Deckelrand (2b) am oberen Rand (4) des Behälters (1) abdichtet.

3. Behälter nach Anspruch 1 oder 2, **dadurch gekennzeichnet, dass** in der unteren Stellung des Deckelinnenbereichs (2a) das Dichtungsprofil (3) derart verformt ist, dass die am Behälterinnenrand anliegende Dichtfläche (3c) vergrößert ist.

4. Behälter nach einem der vorherigen Ansprüche, **dadurch gekennzeichnet, dass** beim Dichtungsprofil (3) die Wandstärke der am Behälterinnenrand anliegenden Dichtfläche (3c) dünner ausgestaltet ist als die Wandstärke des oberen Bereichs des Dichtungsprofils (3).

5. Behälter nach einem der vorherigen Ansprüche, **dadurch gekennzeichnet, dass** das Dichtungsprofil (3), insbesondere die am Behälterinnenrand anliegende Dichtfläche (3c), Noppen, Wülste (8) oder Ausformungen aufweist.

6. Behälter nach einem der vorherigen Ansprüche, **dadurch gekennzeichnet, dass** das Dichtungsprofil (3) den Deckelrand (2b) mit dem Deckelinnenbereich (2a) abdichtet.

## Claims

1. Container (1) for storing food, having an upper horizontal lid (2), the outer edge of which has all around a sealing profile (3) which lies against the upper edge (4) of the container when the container is closed, wherein the lid (2) has an opening (9) with a valve, via which opening air can be sucked out of the closed container in order to obtain a negative pressure, which is lower than the atmospheric pressure, within the container, **characterized in that** the lid (2) has an inner region (2a) which is surrounded all around by a lid edge (2b), wherein the lid inner region (2a) is fastened to the lid edge (2b) via the flexible sealing profile (3) which runs all around and forms a height-variable mounting of the lid inner region (2a), wherein, when negative pressure is not present, the sealing profile (3) keeps the lid inner region (2a) in an upper position and, when negative pressure is present, the sealing profile (3) permits the lid inner region (2a) to move into a lower position.

2. Container according to Claim 1, **characterized in that** the sealing profile (3) keeping the lid inner region (2a) on the lid edge (2b) is connected integrally to the sealing profile (3) which seals the lid edge (2b) at the upper edge (4) of the container (1).

3. Container according to Claim 1 or 2, **characterized in that**, in the lower position of the lid inner region (2a), the sealing profile (3) is deformed in such a manner that the sealing surface (3c) lying against the container inner edge is enlarged.

4. Container according to one of the preceding claims, **characterized in that** the wall thickness of the sealing surface (3c) lying against the container inner edge is thinner in the sealing profile (3) than the wall thickness of the upper region of the sealing profile (3).

5. Container according to one of the preceding claims, **characterized in that** the sealing profile (3), in particular the sealing surface (3c) lying against the container inner edge, has studs, beads (8) or mouldings.

6. Container according to one of the preceding claims, **characterized in that** the sealing profile (3) seals the lid edge (2b) with the lid inner region (2a).

## Revendications

1. Récipient (1) pour conserver des aliments, avec un couvercle supérieur horizontal (2) dont le bord extérieur présente tout autour un profilé d'étanchéité (3) qui, lorsque le récipient est fermé, s'applique contre le bord supérieur (4) du récipient, le couvercle (2) présentant une ouverture (9) avec soupape, par l'intermédiaire de laquelle l'air peut être aspiré hors du récipient fermé, afin d'obtenir à l'intérieur du récipient une dépression qui est inférieure à la pression atmosphérique, **caractérisé en ce que** le couvercle (2) présente une zone intérieure (2a), qui est entourée tout autour par un bord de couvercle (2b), la zone intérieure de couvercle (2a) étant fixée au bord de couvercle (2b) par l'intermédiaire du profilé d'étanchéité flexible, s'étendant tout autour (3), qui forme un support variable en hauteur de la zone intérieure de couvercle (2a), le profilé d'étanchéité (3) maintenant la zone intérieure de couvercle (2a) dans une position supérieure lorsque la dépression n'est pas appliquée et le profilé d'étanchéité (3) permettant un déplacement de la zone intérieure de couvercle (2a) dans une position inférieure lorsque la dépression est appliquée.

2. Récipient selon la revendication 1 , **caractérisé en ce que** le profilé d'étanchéité (3) qui maintient la zone intérieure de couvercle (2a) sur le bord de couvercle (2b) est relié d'un seul tenant au profilé d'étanchéité (3) qui étanchéifie le bord de couvercle (2b) sur le bord supérieur (4) du récipient (1).

3. Récipient selon la revendication 1 ou 2, **caractérisé en ce que**, dans la position inférieure de la zone intérieure de couvercle (2a), le profilé d'étanchéité (3) est déformé de telle sorte que la surface d'étanchéité (3c) appliquée contre le bord intérieur du récipient est agrandie.

4. Récipient selon l'une quelconque des revendications précédentes, **caractérisé en ce que**, dans le cas du profilé d'étanchéité (3), l'épaisseur de paroi de la surface d'étanchéité (3c) appliquée contre le bord intérieur du récipient est réalisée plus mince que l'épaisseur de paroi de la zone supérieure du profilé d'étanchéité (3).

5. Récipient selon l'une quelconque des revendications précédentes, **caractérisé en ce que** le profilé d'étanchéité (3), notamment la surface d'étanchéité (3c) appliquée contre le bord intérieur du récipient, présente des picots, des bourrelets (8) ou des formations.

6. Récipient selon l'une quelconque des revendications précédentes, **caractérisé en ce que** le profilé d'étanchéité (3) étanchéifie le bord de couvercle (2b) avec la zone intérieure de couvercle (2a).
